# EUROPEAN PATENT APPLICATION

(11) **EP 4 535 755 A1**
(43) Date of publication of application: **09.04.2025**
(21) Application number: 23834590.4
(22) Date of filing: 09.06.2023
(51) Int. Cl.: H04L 51/04, H04L 51/224, H04L 12/18

(54) **COMMUNICATION METHOD AND APPARATUS**

(30) Priority: 04.07.2022 CN 202210777076
(71) Applicant: Huawei Cloud Computing Technologies Co., Ltd., Guiyang, Guizhou 550025 (CN)
(72) Inventor: LIAO, Tao, Guiyang, Guizhou 550025 (CN)
(74) Representative: Maiwald GmbH
(86) International application number: PCT/CN2023/099431
(87) International publication number: WO 2024/007816

(57) **Abstract**

A communication method and apparatus are provided. The method includes: A first client receives a first message sent by a second client in a group. The first message includes a reminder symbol and a reminded object. The first client may determine, based on pre-stored role information and the received first message, that a first user of the first client belongs to a subgroup corresponding to the reminded object, and display a reminder message, to remind that an instant message that needs to be concerned by the first user exists in the group. **In** this way, some related users in the group are reminded to concern the instant message while the other users in the group are not disturbed, so that user experience is effectively improved.

## Description

This application claims priority to Chinese Patent Application No. 202210777076.X, filed with the China National Intellectual Property Administration on July 4, 2022 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

With development of communications technologies, there are increasingly diversified communication manners between terminals. Instant messaging (Instant Messaging, IM) is one of currently popular communication manners. A user can exchange an instant message with another user by using instant messaging software. Currently, most instant messaging software can provide a group function. To be specific, a plurality of users are grouped into a same user group. However, there are usually a large quantity of messages in the group, and users may miss important messages. As a result, user experience is affected.

### SUMMARY

Embodiments of this application provide a communication method and apparatus. In this method, a client may send, in a group, an instant message that reminds some members to concern while the other members in the group are not disturbed, thereby improving user experience.

According to a first aspect, an embodiment of this application provides a communication method. The method includes: A first client receives a first message sent by a second client in a group. The first message includes a reminder symbol and a first reminded object, and the reminder symbol indicates the first reminded object to concern the first message. The first reminded object includes identification information of a first subgroup, the first subgroup includes a plurality of members, and the plurality of members in the first subgroup belong to the group. A quantity of the plurality of members in the first subgroup is less than a quantity of members included in the group. Then, the first client determines, based on the first message and pre-stored role information, that a first user of the first client belongs to the first reminded object. The role information stored in the first client indicates that the first user is a member of the first subgroup. The first client displays reminder information. The reminder information indicates that the group includes a message that needs to be concerned by the first user. In this way, a client in the group may send an instant message that reminds specified one or more subgroups to concern. After receiving the instant message, each member (namely, a client) in the group may determine, based on pre-stored role information, whether the member is a member in the subgroup corresponding to a reminded object in the message. When it is determined that the member is the reminded object, reminder information is displayed, to prompt that a message that needs to be concerned by a user is received in the group. In this way, when some related users in the group are reminded to concern the instant message, other users in the group are not disturbed, so that user experience is effectively improved.

For example, the client in this embodiment of this application is a communication apparatus (or an electronic device) that can exchange an instant message, such as a mobile phone, a wearable device, a smart home device, or a vehicle-mounted device.

For example, the client in this embodiment of this application may alternatively be an application disposed on an electronic device.

For example, the group includes at least one group member.

For example, each subgroup includes at least one member.

For example, a single group may include a plurality of subgroups. The subgroups have different identification information.

For example, one user may belong to a plurality of groups, and may belong to a plurality of subgroups in one group.

For example, all clients to which users in the group belong receive the instant message sent by the second client.

For example, the reminded object may include identification information corresponding to a plurality of subgroups. In other words, members in the plurality of different subgroups are reminded to concern the instant message.

For example, the identification information of the subgroup may be a label name in embodiments of this application.

In this embodiment of this application, the server may determine, based on the reminder symbol and the reminded object in the instant message, the user that needs to be reminded, and indicate the corresponding client to display the reminder information.

In a possible implementation, the plurality of members have a same target attribute. In this way, users with the same attribute may be in one subgroup, and the members in the group may determine, based on the attribute of the subgroup, the subgroup that needs to be reminded.

For example, target attributes corresponding to all subgroups in the group may be the same or different.

In a possible implementation, before the first client receives the first message sent by the second client in the group, the method further includes: The first client sends, to a server in response to a received first operation, subgroup addition request information. The subgroup addition request information includes identification information of the group, the identification information of the first subgroup, and the target attribute. The subgroup addition request information indicates the server to create the first subgroup in the group and match the plurality of members based on the target attribute. In this way, the members in the group can create the subgroup and set the attribute of the subgroup. The server can automatically match the members having the target attribute and add the members to the subgroup based on setting of the members, to complete creation of the subgroup.

For example, the subgroup addition request information may further include subgroup description information. The subgroup description information is for describing the target attribute of the subgroup.

For example, the first user of the first client may be a group owner in the group, to be specific, a user creating the group.

For example, the first client may be any user in the group.

In a possible implementation, after the first client sends, to the server in response to the received first operation, the subgroup addition request information, the method further includes: The first client obtains first role information sent by the server, where the first role information indicates that the first user belongs to the first subgroup. In this way, a member belonging to the first subgroup may receive the role information, and a member not belonging to the subgroup does not receive the role information. When receiving a message subsequently, each member in the group may determine, based on the stored role information, whether the member belongs to the subgroup corresponding to the reminded object.

For example, the role information includes a plurality of pieces of role information, for example, includes first role information and second role information. Each piece of role information indicates a subgroup.

For example, the client may record each piece of the obtained role information in a table or in another manner.

In a possible implementation, after the first client sends, to the server in response to the received first operation, the subgroup addition request information, the method further includes: The first client receives subgroup addition indication information sent by the server. The subgroup addition indication information includes the identification information of the group and the identification information of the first subgroup. The subgroup addition indication information indicates that the server has created the first subgroup in the group. The first client stores, in response to the subgroup addition indication information, group information of the first subgroup. The group information of the first subgroup includes the identification information of the group and the identification information of the first subgroup. The group information indicates that the group includes the first subgroup. In this way, each user may determine, based on the subgroup addition indication information, that a new subgroup is added to the group. When a message is sent subsequently, a member in the specified subgroup may be reminded to concern the message.

In a possible implementation, the first role information includes the identification information of the first subgroup. In this way, each client may determine, based on a subgroup identifier in the role information and a subgroup identifier included in the reminded object, whether the client belongs to the subgroup corresponding to the reminded object.

In a possible implementation, the role information stored in the first client further includes second role information. The second role information includes identification information of a second subgroup, and the second role information indicates that the first user belongs to the second subgroup. All or a part of the members in the first subgroup are different from members in the second subgroup. In this way, a single user in the group may belong to a plurality of subgroups, and store role information corresponding to different subgroups. The client may determine, based on the identification information of the subgroups corresponding to the plurality of pieces of role information included in the stored role information, whether the client is a member of the subgroup corresponding to the reminded object.

For example, a target attribute of the first subgroup is different from a target attribute of the second subgroup. For example, a target attribute of the first subgroup may be partially different from a target attribute of the second subgroup.

In a possible implementation, that the first client determines, based on the first message and pre-stored role information, that a first user of the first client belongs to the first reminded object includes: The first client matches the identification information of the first subgroup with identification information included in the role information. The first client determines that the identification information of the first subgroup is successfully matched, and determines that the first user belongs to the first subgroup. In this way, in a manner of label matching, some members in the group can be enabled to belong to a same subgroup, that is, have same role information, so that the users are grouped into one subgroup.

In a possible implementation, the method further includes: The first client sends, to the server in response to a received second operation, subgroup update request information. The subgroup update request information includes the identification information of the group, the identification information of the first subgroup, and a new target attribute. The subgroup update request message indicates the server to match a member for the first subgroup based on the new target attribute. In this way, the client can update the member in the specified subgroup by modifying rule content.

In a possible implementation, the method further includes: The first client sends, to the server in response to a received third operation, subgroup deletion request information. The subgroup deletion request information includes the identification information of the group and the identification information of the first subgroup. The subgroup deletion request information indicates the server to delete the first subgroup in the group. The first client receives subgroup deletion response information sent by the server. The subgroup deletion response information indicates that the server has deleted the first subgroup in the group. The first client deletes, in response to the subgroup deletion response information, the first role information included in the role information. In this way, in this embodiment of this application, a solution of modifying, adding, or deleting the subgroup can be provided, so that the subgroup in the group and composition of the members in the subgroup can be flexibly adjusted.

In a possible implementation, the target attribute includes one or more of the following: a work location, a gender, a job title, and an educational background.

In a possible implementation, that the first client displays reminder information includes: The first client displays the reminder information in at least one of the following manners: displaying the reminder information on a lock screen, a leftmost screen, and/or a notification bar; displaying the reminder information in a message display interface of the group; or displaying, on an application interface of the first client, the reminder information in a message box corresponding to the group. For example, after the client displays the reminder information, the user may determine, based on the reminder information, that a message that needs to be concerned by the user exists in the group. The user may tap the corresponding reminder information on the interface, to view the message.

In a possible implementation, the reminder information includes the identification information of the first subgroup. For example, the reminder information may include a subgroup label, namely, identification information of a subgroup, so that the user determines that the object reminded by the instant message is a subgroup to which the user belongs.

In a possible implementation, that the first client determines, based on the first message and pre-stored role information, that a first user of the first client belongs to the first reminded object includes: The first client detects that the first message includes the reminder symbol, and determines, based on the role information, that the first user belongs to the first reminded object. In this way, in this embodiment of this application, the client may detect the reminder symbol and the reminded object, to determine whether the client is the reminded object. In another embodiment, a subject that detects the reminder symbol and the reminded object may alternatively be the server.

In a possible implementation, the method further includes: The first client receives a second message sent by the second client in the group, where the second message includes second reminder information, the second reminder information includes the reminder symbol and a second reminded object, the second reminder information indicates the second reminded object to concern the second message, the second reminded object includes the identification information of the second subgroup, the second subgroup includes a plurality of members, and the plurality of members belong to the group; and the first client detects the reminder symbol in the first message, and determines, based on the role information, that the first user is not the second reminded object. In this way, when the client receives the instant message in the group and determines, based on the pre-stored role information, that the client does not belong to the subgroup indicated by the reminded object, the client does not display the reminder information, so that a user that is not the reminded object is not disturbed, thereby improving user experience.

According to a second aspect, an embodiment of this application provides a communication apparatus. The apparatus includes: one or more processors; a memory; and one or more computer programs. The one or more computer programs are stored in the memory. When the computer programs are executed by the one or more processors, the communication apparatus is enabled to perform the following steps: receiving a first message sent by a second client in a group, where the first message includes a reminder symbol and a first reminded object, the reminder symbol indicates the first reminded object to concern the first message, the first reminded object includes identification information of a first subgroup, the first subgroup includes a plurality of members, the plurality of members belong to the group, and a quantity of the plurality of members is less than a quantity of members included in the group; determining, based on the first message and pre-stored role information, that a first user of a first client belongs to the first reminded object, where the role information indicates that the first user is a member of the first subgroup; and displaying reminder information, where the reminder information indicates that the group includes a message that needs to be concerned by the first user.

For example, the communication apparatus may be an electronic device that can exchange an instant message, such as a mobile phone, a tablet, a wearable device, a smart home device, or a vehicle-mounted device.

For example, the communication apparatus may be a chip that supports an application that implements the method in embodiments of this application.

In a possible implementation, the plurality of members have a same target attribute.

In a possible implementation, when the computer programs are executed by the one or more processors, the communication apparatus is enabled to perform the following step: sending, to a server in response to a received first operation, subgroup addition request information, where the subgroup addition request information includes identification information of the group, the identification information of the first subgroup, and the target attribute, and the subgroup addition request information indicates the server to create the first subgroup in the group and match the plurality of members based on the target attribute.

In a possible implementation, when the computer programs are executed by the one or more processors, the communication apparatus is enabled to perform the following step: obtaining first role information sent by the server, where the first role information indicates that the first user belongs to the first subgroup.

In a possible implementation, when the computer programs are executed by the one or more processors, the communication apparatus is enabled to perform the following steps: receiving subgroup addition indication information sent by the server, where the subgroup addition indication information includes the identification information of the group and the identification information of the first subgroup, and the subgroup addition indication information indicates that the server has created the first subgroup in the group; and storing, in response to the subgroup addition indication information, group information of the first subgroup, where the group information of the first subgroup includes the identification information of the group and the identification information of the first subgroup, and the group information indicates that the group includes the first subgroup.

In a possible implementation, the first role information includes the identification information of the first subgroup.

In a possible implementation, the role information further includes second role information, the second role information includes identification information of a second subgroup, the second role information indicates that the first user belongs to the second subgroup, and all or a part of the members in the first subgroup are different from members in the second subgroup.

In a possible implementation, when the computer programs are executed by the one or more processors, the communication apparatus is enabled to perform the following steps: matching the identification information of the first subgroup with identification information included in the role information; and determining that the identification information of the first subgroup is successfully matched, and determining that the first user belongs to the first subgroup.

In a possible implementation, when the computer programs are executed by the one or more processors, the communication apparatus is enabled to perform the following step: sending, to the server in response to a received second operation, subgroup update request information, where the subgroup update request information includes the identification information of the group, the identification information of the first subgroup, and a new target attribute, and the subgroup update request message indicates the server to match a member for the first subgroup based on the new target attribute.

In a possible implementation, when the computer programs are executed by the one or more processors, the communication apparatus is enabled to perform the following steps: sending, to the server in response to a received third operation, subgroup deletion request information, where the subgroup deletion request information includes the identification information of the group and the identification information of the first subgroup, and the subgroup deletion request information indicates the server to delete the first subgroup in the group; receiving subgroup deletion response information sent by the server, where the subgroup deletion response information indicates that the server has deleted the first subgroup in the group; and deleting, in response to the subgroup deletion response information, the first role information included in the role information.

In a possible implementation, the target attribute includes one or more of the following: a work location, a gender, a job title, and an educational background.

In a possible implementation, when the computer programs are executed by the one or more processors, the communication apparatus is enabled to display the reminder information in at least one of the following manners: displaying the reminder information on a lock screen, a leftmost screen, and/or a notification bar; displaying the reminder information in a message display interface of the group; or displaying, on an application interface of the first client, the reminder information in a message box corresponding to the group.

In a possible implementation, the reminder information includes the identification information of the first subgroup.

In a possible implementation, when the computer programs are executed by the one or more processors, the communication apparatus is enabled to perform the following step: detecting that the first message includes the reminder symbol, and determining, based on the role information, that the first user belongs to the first reminded object.

The second aspect and any one of the implementations of the second aspect respectively correspond to the first aspect and any one of the implementations of the first aspect. For technical effects corresponding to the second aspect and any one of the implementations of the second aspect, refer to technical effects corresponding to the first aspect and any one of the implementations of the first aspect. Details are not described herein again.

According to a third aspect, an embodiment of this application provides a graphical user interface on a computer device. The computer device includes a display, a touch-sensitive surface, a memory, and one or more processors that execute one or more instructions stored in the memory. When the one or more instructions are executed by the one or more processors, the computer device is enabled to perform the following steps: receiving a first operation, where the first operation indicates to add a subgroup to a group; displaying a subgroup setting interface based on the first operation; receiving a second operation on the subgroup setting interface, where the second operation indicates to set identification information of a first subgroup and a target attribute of the first subgroup; and receiving a third operation on the subgroup setting interface, and sending, to a server, subgroup addition request information, where the subgroup addition request information includes identification information of the group, the identification information of the first subgroup, and the target attribute, and the subgroup addition request information indicates the server to create the first subgroup in the group and match a plurality of members based on the target attribute.

According to a fourth aspect, this application provides a computer readable medium, configured to store a computer program. The computer program includes instructions for performing the method in any one of the first aspect or the possible implementations of the first aspect.

According to a fifth aspect, this application provides a computer program. The computer program includes instructions for performing the method in any one of the first aspect or the possible implementations of the first aspect.

According to a sixth aspect, this application provides a chip. The chip includes a processing circuit and a transceiver pin. The transceiver pin and the processing circuit communicate with each other through an internal connection path. The processing circuit performs the method in any one of the first aspect or the possible implementations of the first aspect, to control a receiving pin to receive a signal and a sending pin to send a signal.

According to a seventh aspect, this application provides a communication system. The system includes the first client, the second client, and the server described above.

### BRIEF DESCRIPTION OF DRAWINGS

FIG. 1a is a diagram of an example of an application scenario;
FIG. 1b is a diagram of a hardware structure of an example of an electronic device;
FIG. 1c is a diagram of a software structure of an example of an electronic device;
FIG. 2 is a diagram of an example of user interfaces;
FIG. 3 is a schematic flowchart of an example of a communication method;
FIG. 4 is a diagram of an example of user interfaces;
FIG. 5 is a diagram of an example of user interfaces;
FIG. 6 is a schematic flowchart of an example of communication;
FIG. 7 is a diagram of an example of user interfaces;
FIG. 8 is a diagram of an example of user interfaces;
FIG. 9 is a diagram of an example of user interfaces;
FIG. 10 is a diagram of an example of reminder information;
FIG. 11 is a schematic flowchart of an example of deleting a group label;
FIG. 12 is a schematic flowchart of an example of modifying a group label;
FIG. 13 is a diagram of an example of user interfaces; and
FIG. 14 is a schematic block diagram of an example of an apparatus.

### DESCRIPTION OF EMBODIMENTS

The following clearly and completely describes the technical solutions in embodiments of this application with reference to the accompanying drawings in embodiments of this application. It is clear that the described embodiments are a part but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "plurality of" means two or more than two. For example, a plurality of processing units mean two or more processing units, and a plurality of systems mean two or more systems.

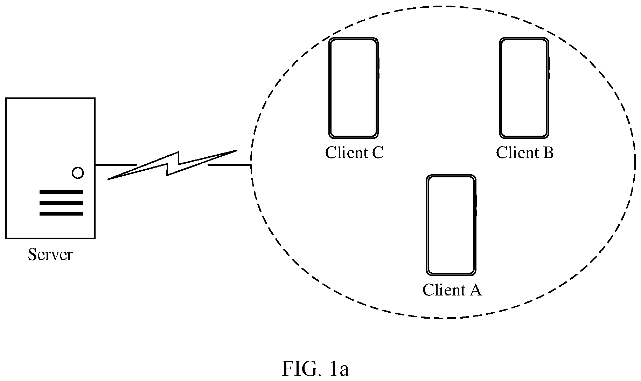

Before the technical solutions in this embodiment of this application are described, an application scenario in this embodiment of this application is first described with reference to the accompanying drawings. FIG. 1a is a diagram of an application scenario according to an embodiment of this application. The application scenario includes but is not limited to a server, a client A, a client B, and a client C. The server may be a server or a server group provided by an application vendor. For example, the server may be a server group provided by an application vendor of a chat application, and may be configured to process a message generated by the chat application. In this embodiment of this application, an example in which the client is a mobile phone is used for description. In another embodiment, the client may alternatively be a device that can send and receive an instant message, such as a tablet, a wearable device, a computer, or a vehicle-mounted host. It is to be noted that, in this embodiment of this application, an example in which each client has only one user account is used for description. For example, the client A corresponds to a user A, the client B corresponds to a user B, and the client C corresponds to a user C. The user may log in to the client based on a user account. It is to be further noted that, during actual application, there may be one or more servers and clients. A quantity of devices in the application scenario shown in FIG. 1a is merely an example for adaptability. This is not limited in this application.

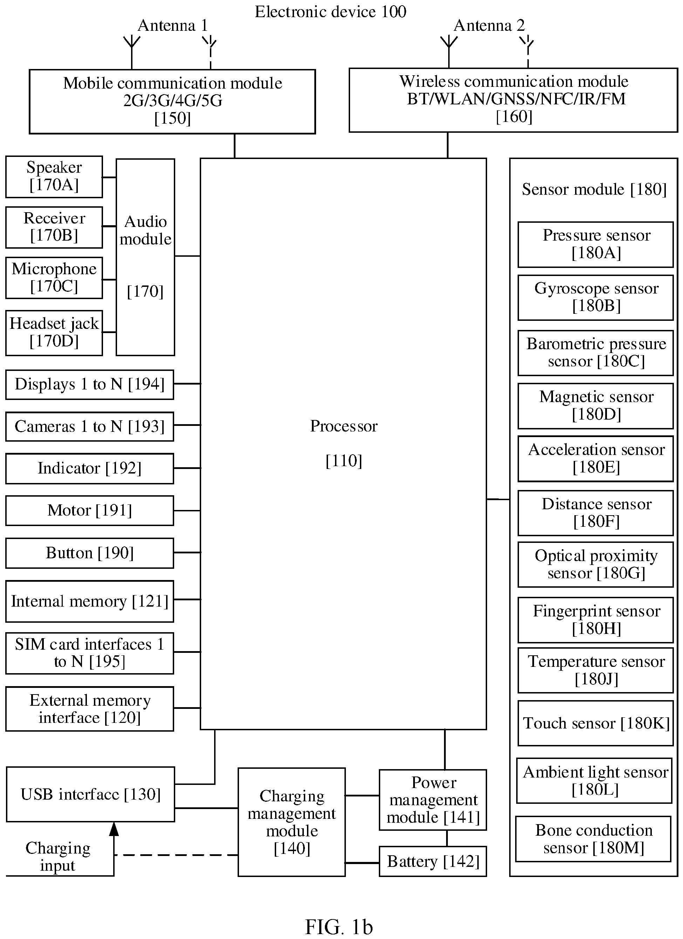

FIG. 1b is a diagram of a structure of an electronic device 100. It is to be understood that the electronic device 100 shown in FIG. 1b is merely an example of the electronic device, and the electronic device 100 may have more or fewer components than those shown in the figure, or may combine two or more components, or may have different component configurations. Components shown in FIG. 1b may be implemented by hardware, software, or a combination of hardware and software, including one or more signal processing and/or application-specific integrated circuits.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache memory. The memory may store instructions or data that is just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The charging management module 140 is configured to receive charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like. In this embodiment of this application, the wireless communication function of the electronic device 100 may be used to send and receive an instant message.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor and the like.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

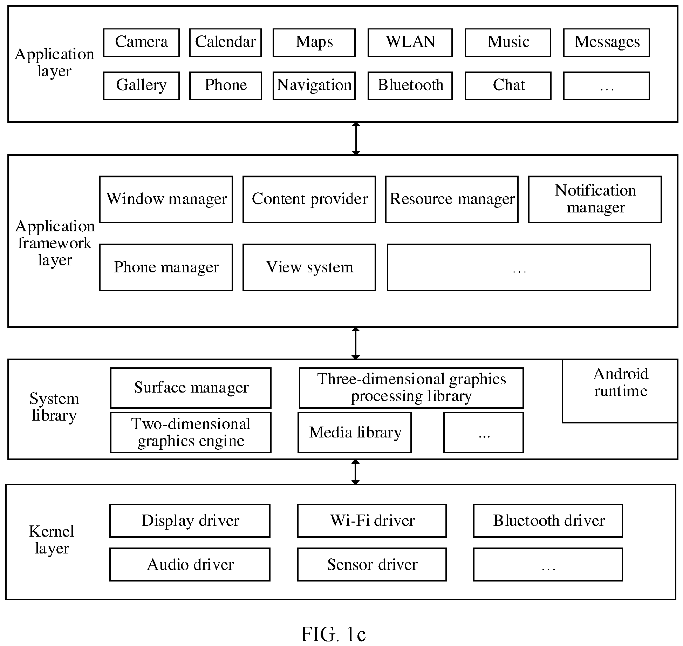

FIG. 1c is a block diagram of the software structure of the electronic device 100 according to an embodiment of this application.

In a layered architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 1c, the application packages may include applications such as Camera, Gallery, Calendar, Phone, Maps, Navigation, WLAN, Bluetooth, Music, Videos, Messages, and Chat. Optionally, the chat application is instant messaging software. The application may be a system built-in application, or may be a third-party application. This is not limited in this application. It is to be noted that, in this embodiment of this application, only the chat application is used as an example for description. In another embodiment, the electronic device may further include other instant messaging software. This is not limited in this application.

The application framework layer provides an application programming interface (application programming interface, API) and a programming framework for an application at the application layer. The application framework layer includes some predefined functions.

As shown in FIG. 1c, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application program. The data may include a video, an image, audio, calls that are made and answered, a browsing history and bookmarks, an address book, and the like.

The view system includes visual controls such as a control for displaying a text and a control for displaying an image. The view system may be configured to construct an application program. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application program.

The notification manager enables an application program to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It can be understood that components included in the system framework layer, and the system library and runtime layer that are shown in FIG. 1c do not constitute any specific limitation on the electronic device 100. In some other embodiments of this application, the electronic device 100 may include more or fewer components than shown in the figure, or some components are combined, or some components are split, or the components are differently arranged.

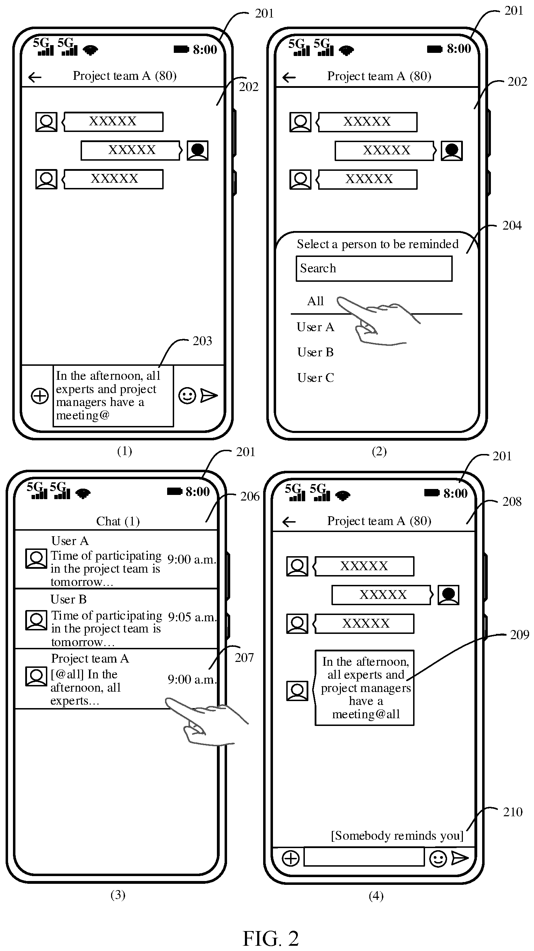

FIG. 2 is a diagram of an example of user interfaces. Refer to (1) in FIG. 2. A group (for example, a project team A) includes a plurality of users. A display interface 201 of a mobile phone includes a chat interface 202 of the project team A. A user may view an instant message (referred to as a message for short below) in the project team A on the chat interface 202. For example, the chat interface 202 includes an input box 203. A local user may enter information (which may be text information or image information) by using the input box 203, and after tapping a send button, may send the information in the input box 203 to a server. The server may forward the received information to each user in the project team A. Refer to (1) in FIG. 2. The user enters information "In the afternoon, all experts and project managers have a meeting" in the input box 203, and the user may enter a symbol "@" to remind relevant personnel to view the message. It is to be noted that, in this embodiment of this application, an example in which the symbol "@" is a reminder character is merely used for description. In another embodiment, the reminder character may alternatively be another character, for example, a character "*". This is not limited in this application.

Refer to (2) in FIG. 2. In response to a received operation of entering the character "@" by the user, a chat application displays an option box 204 of "Select a person to be reminded". The option box 204 of "Select a person to be reminded" includes but is not limited to a search box and a reminded object. Optionally, if the current user is a group owner of the project team A, the reminded object in the option box 204 includes but is not limited to an option "all" and an option corresponding to each user (for example, a user A, a user B, and a user C) of the project team A. Optionally, the option "all" is for reminding all users (or may be referred to as members, to be specific, all members including the group owner) in the group to concern the message. Optionally, the option of each user is for reminding a specified user in the group to concern the message.

It is to be noted that the "group owner" in this embodiment of this application is a user creating the group. A group member may be another user in the group except the group owner. It is to be further noted that, in an embodiment, only the group owner can remind all the users in the group to concern the message. To be specific, after the group owner enters the symbol "@", the option box 204 displayed by the chat application of the group owner includes the option "all". After another group member enters the symbol "@", the option box 204 of the another group member does not include the option "all". In another example, both the group owner and the group member can remind all the users in the group to concern the message. To be specific, after the group owner and the group member enter the symbol "@", both the option boxes 204 display the option "all".

Still refer to (2) in FIG. 2. The user taps the option "all" to remind all the users in the group to concern the message, to be specific, "In the afternoon, all experts and project managers have a meeting". The user may tap a send option to send the message. After receiving the message, the server forwards the message to all the users (including the group owner) in the group.

Refer to (3) in FIG. 2. A user (for example, the user C) in the group is used as an example. After receiving the message forwarded by the server, a chat application of the user C detects that the message includes the character "@" (namely, the reminder character, which may also be referred to as a reminder identifier), and further detects a reminded object. For example, the chat application detects that the reminded object corresponding to the character "@" is "all". Correspondingly, the client of the user C may display reminder text in a chat option box corresponding to the project team A in a chat list. For example, refer to (3) in FIG. 2. A chat list interface 206 of the user C may include chat option boxes of a plurality of chat objects. For example, the chat option box 207 of the project team A includes but is not limited to identification information (including a name and an icon), reminder text, and a latest message (which may be all information or partial information in the latest message) of the project team A. The chat application of the user C identifies that the received message includes the character "@", and displays reminder text, for example, "[@all]", in the chat option box 207 of the project team A, to indicate that the project team A includes a message that all the users are reminded to concern. It should be noted that, after receiving the message including the character "@" (namely, the reminder character, which is not repeatedly described below), the user may receive a plurality of new messages. In this case, the chat option box 207 of the project team A updates and displays a latest message, but still displays the reminder text until the user taps the chat option box 207 of the project team A to view the message.

For example, the user may tap the chat option box 207. Refer to (4) in FIG. 2. The chat application displays a chat interface 208 of the project team A in response to the received user operation. The chat interface 208 displays a plurality of messages of the project team A, for example, including a message 209. For example, information in the message 209 is the message "In the afternoon, all experts and project managers have a meeting@all" sent by the group owner. Optionally, the chat interface 208 further displays reminder text, for example, including text 210 "[Somebody reminds you]", to indicate that the message in the group includes a message that the user is reminded to concern. Certainly, the reminder text may alternatively be for distinguishing between reminding all the users and reminding a specified user. This is not limited in this application. For example, if the user taps the text 210 "[Somebody reminds you]", the chat interface 208 jumps to the message (including a message of @all and a message of @the local user) that the local user is reminded to concern.

In another example, if the reminded object in the message sent by the group owner is a specified user, for example, the user B and the user C, after receiving the message forwarded by the server, and detecting that the message includes the reminder character (namely, the character "@"), the user B and the user C further detect whether the reminded object is the user B and the user C. For example, the message may include the reminded object (to be specific, identification information of the user B and the user C, for example, ID numbers of the users in the chat application). The user B is used as an example. When detecting that the message includes the identification information of the user B, the user B determines that the reminded object includes the user B. In a chat list of the user B, reminder text is displayed in the chat option box corresponding to the project team A. Optionally, the reminder text may be "[Someone@You]", to remind that the project team includes a message that the local user is reminded to concern.

For example, after the chat application returns to the chat list interface, the chat application may confirm that the user has viewed the message that the user is reminded to concern. Correspondingly, the chat option box 207 of the project team A cancels display of the reminder text. If a message including the reminder character is received again, the foregoing steps are repeated.

It is to be noted that, in the conventional technology, instant messaging software generally provides only a function of reminding all users in a group to concern a message or reminding a specified user in a group to concern a message. For example, when a user needs to remind a plurality of users, the user can only remind all users to concern, or separately remind the plurality of users to concern. However, when all the users are reminded to concern, interference may be caused to a user that does not need to concern the message. In addition, the user that needs to concern the message may ignore the message when viewing a message that reminds all the users. In addition, when the plurality of users are reminded, the sender needs to select the plurality of to-be-reminded users one by one, and may miss a user or redundantly select a user. In addition, an operation is complex, and user experience is poor.

An embodiment of this application provides a communication method, to provide a grouping (or classification) function in a group, and group a plurality of users with a same attribute or similar attributes or a plurality of specified users into a same subgroup (or a same subcategory), so that users in one or more subgroups can be reminded when a message is sent. In this way, interference to another user is avoided, and a user that needs to concern the message can be specially reminded, to improve user experience.

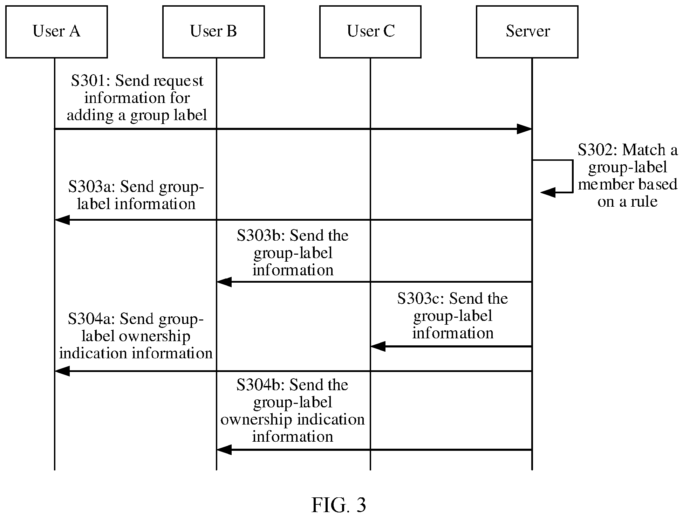

FIG. 3 is a schematic flowchart of an example of a communication method. Refer to FIG. 3. The flowchart is mainly for describing a procedure of creating a subgroup in a group, and steps include but are not limited to the following steps.

S301: A user A sends, to a server, request information for adding a group label.

For example, the user A, a user B, and a user C are in a same group, and the user A is a group owner. For creation of the group, refer to embodiments of the conventional technology. This is not limited in this application.

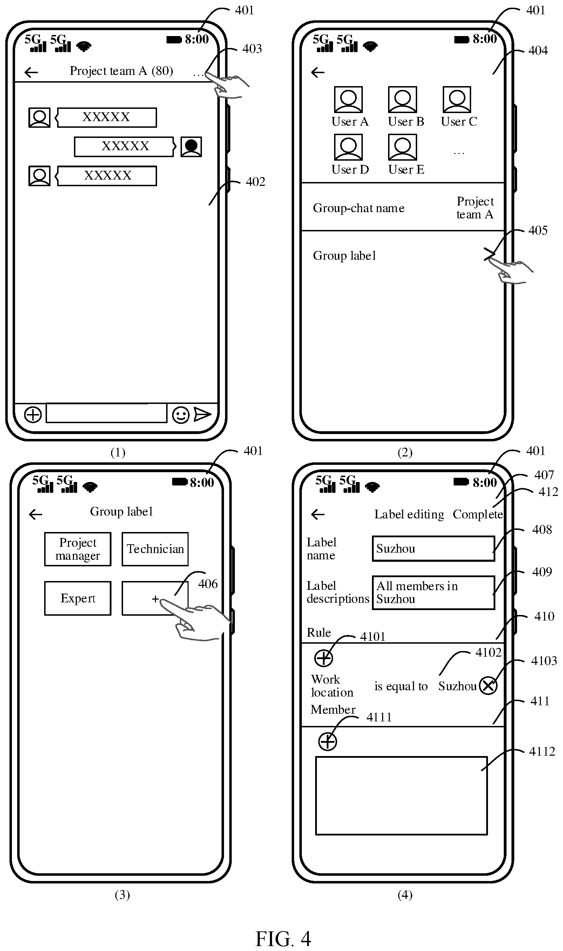

FIG. 4 is a diagram of an example of user interfaces. Refer to (1) in FIG. 4. A display interface 401 displays a chat interface 402 of a group (for example, a project team A), and the chat interface 402 includes but is not limited to a chat window, an enter box, and a More option 403. The chat window displays a plurality of messages of the group. Refer to (2) in FIG. 4. A chat application displays a group information interface 404 in response to a received user operation. The group information interface 404 includes but is not limited to information about group members, a group-chat name (namely, the project team A), and a group-label option 405. The information about the group members includes icons and names of the members, for example, a user A to a user E.

Refer to (3) in FIG. 4. The chat application displays a group-label setting interface in response to a received user operation. The group-label setting interface includes but is not limited to: one or more created group labels and a group-label adding option 406. In this embodiment of this application, the group label may be understood as the subgroup described above. To be specific, one group label corresponds to one subgroup. A user may tap the group label to perform an operation such as rule modification on the subgroup. A specific embodiment is described in detail below. For example, the user may tap the group-label adding option 406, to add a subgroup. Refer to (3) in FIG. 4. The chat application displays a label editing interface 407 in response to a received user operation. The label editing interface may also be referred to as a subgroup setting interface or a label setting interface. This is not limited in this application. For example, the label editing interface 407 includes but is not limited to a label name setting control 408, a label description setting control 409, a rule setting control 410, a member setting control 411, and a completion control 412.

The label name setting control 408 for is configured to set a name (namely, a group label) of a subgroup. In this example, the label name is "Suzhou". The name is merely an example, and may be set based on an actual requirement. This is not limited in this application.

The label description setting control 409 is configured to set description information of a label. In this example, the description information of the label includes "All members in Suzhou". Optionally, the label description setting control is optional, and may not be filled in or may not be included. This is not limited in this application.

The rule setting control 410 is configured to set a rule corresponding to a subgroup. The rule setting control 410 includes but is not limited to: a rule addition option 4101, rule content 4102, and a rule content deletion option 4103. A user may tap the rule addition option 4101, to add new rule content. The rule content 4102 may be set by the user. For example, in this embodiment, the rule content added by the user is "A work location is equal to Suzhou". "A work location" may be referred to as a rule type of the rule content, "is equal to" may be referred to as a limitation item of the rule content, and "Suzhou" may be referred to as an object of the rule content. The rule content indicates to add a member that is in a subgroup and whose work location is Suzhou to a subgroup corresponding to the label. For example, the rule content deletion option 4103 may be configured to delete specified rule content.

It is to be noted that, in this embodiment of this application, when creating a client account of the chat application, each user may set a user label. The user label may be set by the user, or may be set by a company to which the user belongs. This is not limited in this application. For example, the user label may include but is not limited to a work-location label, a job-title label, a gender label, a user-name label, a graduate-school label, a department label, and the like.

It is to be further noted that a rule type (for a concept, refer to the foregoing descriptions) of a single piece of rule content in the group label in this embodiment of this application needs to cover one label in the user label. For example, the rule type corresponding to the rule content in (2) in FIG. 4 corresponds to the label of the work location of the user. Optionally, the rule type may include an option button, and the user may tap the option button. In response to a received user operation, the chat application may display a candidate list of rule types. The list may include one or more available rule types, for example, a work location, a job title, a gender, a graduate school, and a department.

It is to be further noted that the limitation item in this embodiment of this application may include but is not limited to: being equal to, being not equal to, including, excluding, and the like. "Being equal to" and "being not equal to" may be understood as exact matching. "Including" and "excluding" are fuzzy matching. For example, the rule content "A work location is equal to Suzhou" indicates a user whose work location of the user label is Suzhou. A user whose work locations are Suzhou and Nanjing is not included in this scope. Rule content "A work location is not equal to Suzhou" indicates all regions except Suzhou in the work location of the user label. Rule content "A work location includes Suzhou" indicates that the work location of the user label includes a user in Suzhou. For example, a user whose work locations are Suzhou and Nanjing is in this scope. Rule content "A work location excludes Suzhou" indicates a user whose work location excludes Suzhou.

Still refer to (4) in FIG. 4. The member setting control 411 is configured to set a member in the subgroup, and may be configured to add or delete a member. The member setting control 411 includes but is not limited to a member addition option 4111 and a member list box 4112. The member addition option 4111 may be used by the user to manually add a member. The member list box 4112 may be configured to display a user in the group. In this example, the user A sets only a label name, label descriptions, and a rule, but does not set a member of the subgroup. The member of the subgroup is matched and set by the server. A specific implementation is described in detail below.

For example, the user A may tap the completion control 412, to indicate that setting of the subgroup is completed. In response to a received user operation, the chat application sends, to the server, the request information for adding a group label. The request information for adding a group label includes but is not limited to: group identification information, a label name, description information of a label, and rule content. In this example, the group identification information may be a name or an ID number of a group, and indicates that a subgroup is to be established in the group (for example, in the project team A). The label name is "Suzhou", the description information of a label is "All members in Suzhou", and the rule content is "A work location is equal to Suzhou". It may be understood that the request information indicates to create a subgroup named "Suzhou" in the group of the project team A, and work locations of members in the subgroup are all Suzhou.

It is to be noted that, in this embodiment of this application, an example in which the group owner (namely, the user A) creates the group label (that is, creates the subgroup) is used for description. In another embodiment, another member in the group may also create a group label. This is not limited in this application. Optionally, another member in the group may be authorized by the group owner to create a label. For example, after creating a group label through the interface in (4) in FIG. 4, the another member sends the group label (including information such as a label name and rule content) to the group owner via the server. After receiving the group label and authorizing the another member, the group owner or the member who creates the group label sends, to the server, request information for adding a group label, thereby ensuring security of creating the group label. Optionally, the group owner may alternatively authorize a part of the members, and the authorized members have permissions of creating and/or modifying a group label.

S302: The server matches a group-label member based on a rule.

For example, the server receives the request information that is for adding a group label and that is sent by the user A, and obtains information such as the label name, the description information of a label, and the rule content. The server may match a corresponding member for the group label (namely, a subcategory) based on the rule content.

For example, as described above, each user corresponds to a user label, and the server may store the user label in a process of creating a user account. For example, after the user account is created, the user may send user information (including information such as a user name, a user account, and a user label) to the server, and the server stores the user information. In this example, the server may search storage for the user label of each member in the group based on the received rule content and the group identification information. Optionally, the server may traverse the user label of each member in the group one by one, to correspondingly record a user that is successfully matched with the group label, until all the users in the group are traversed.

For example, the group includes the user A to a user E, where work locations in user labels of the user A, the user B, and the user E are Suzhou. The server searches, based on the rule type in the rule content, labels of work locations in user labels of the user A to the user E, and searches, based on a limitation item (to be specific, being equal to) and an object (to be specific, Suzhou), for a user whose label of a work location is Suzhou. The server determines that the user A, the user B, and the user E are successfully matched, to be specific, are members of a subgroup whose label name is "Suzhou".

For example, the server stores a correspondence between the group, the group label, and the member included in the subgroup corresponding to the group label. Table 1 is an example of a correspondence table.

**Table 1**

| Group | Group label | Members |
|---|---|---|
| Project team A | Project manager | User A and user D |
| | Expert | User A, user B, and user E |
| | Technician | User C and user D |
| | Suzhou | User A, user B, and user E |
| Project team B | Nanjing | User C and user D |
| | Expert | User A, user F, and user G |
| ... | ... | ... |

As shown in Table 1, the server records information about a subgroup that has been created in the project team A. For example, the project team A includes a subgroup whose label name is "Project manager", and members included in the subgroup are the user A and the user D. The project team A includes a subgroup whose label name is "Expert", and members included in the subgroup are the user A, the user B, and the user E. The project team A includes a subgroup whose label name is "Technician", and members included in the subgroup are the user C and the user D. The project team A includes a subgroup whose label name is "Suzhou", and members included in the subgroup are the user A, the user B, and the user E. The project team B includes a subgroup whose label name is "Nanjing", and members included in the subgroup are the user C and the user D. The project team B includes a subgroup whose label name is "Expert", and members included in the subgroup are the user A, the user F, and the user G.

It is to be noted that, in this embodiment of this application, only a table form is used as an example for description. In another embodiment, the server may record the correspondence between the group, the group label, and the member in another form.

It is to be further noted that the server may record all the groups in one table, or may classify the groups based on a preset rule, and record groups of a same type in a same table. This may be set based on an actual requirement, and is not limited in this application.

S303a: The server sends group-label information to the user A.

S303b: The server sends the group-label information to the user B.

S303c: The server sends the group-label information to the user C.

For example, after matching the member of the subgroup, the server sends the group-label information to each user (including the user A to the user E) in the group, to indicate that the subgroup corresponding to the group label has been created in the group. The group-label information includes but is not limited to: a group name, the label name, the description information of a label, and the like.

Optionally, the group-label information sent by the server to a group member (for example, the user B and the user C) may include member information, or may not include the member information. This is not limited in this application. The group-label information sent by the server to the group owner (for example, the user A) includes the member information. The member information includes identification information of the member matched in S302. The identification information may be a name of the member in the group.

It is to be noted that, in this embodiment of this application, only the user A, the user B, and the user C are used as an example for description. For processing of another group member, refer to the user A to the user C. Details are not described herein again.

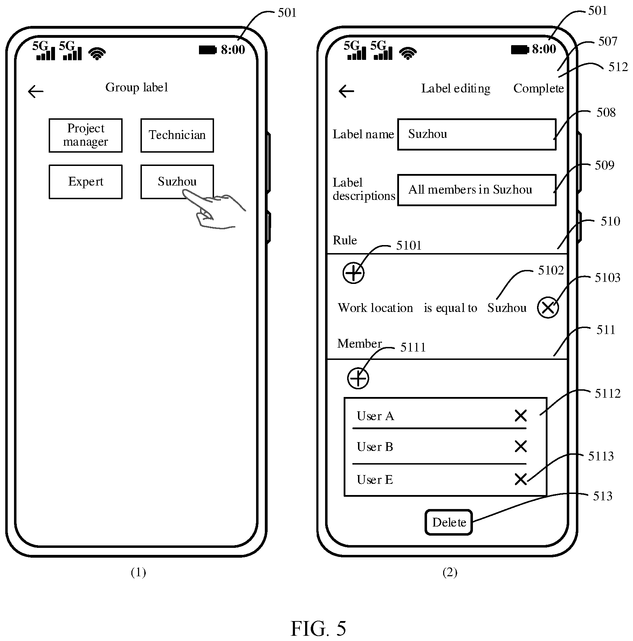

FIG. 5 is a diagram of an example of user interfaces. Refer to (1) in FIG. 5. For example, the user A is used as an example. After receiving the group-label information, the user A may obtain the group name, the label name, the description information of a label, and the member information in the group-label information. Correspondingly, the group label setting interface includes the newly added group label, namely, "Suzhou". The user may tap the label "Suzhou" in a display interface 501, to view information about the group label. It is to be noted that all other members in the group can view the group-label information. For example, before sending a message, the user C may determine, by viewing the group-label information, whether the subgroup is a subgroup that needs to be reminded.

Refer to (2) in FIG. 5. The chat application displays a label editing interface 507 in response to a received user operation. The label editing interface 507 includes but is not limited to: a label-name setting control 508, a label-description setting control 509, a rule setting control 510, and a member setting control 511. For descriptions of the controls, refer to the foregoing descriptions. Details are not described herein again. For example, as the group owner, the user A may modify the information about the group label. For example, the user A may add rule content by tapping an adding option 5101, or may delete the rule content by tapping a deletion option 5103, or may add a member by tapping a member addition option 5111. For example, as the group owner, the user A may further delete the group label, for example, tap a deletion option 513, to delete the group label. A specific example is described below. It is to be noted that, for a completion control 512 and rule content 5102 in FIG. 5, refer to corresponding content in FIG. 4. Details are not described herein again.

Still refer to (2) in FIG. 5. As described above, the user A may receive the group-label information carrying the member information. Correspondingly, a member list box 5112 of the member setting control 511 includes the members included in the subgroup (namely, the group label "Suzhou"), for example, includes the user A, the user B, and the user E. Optionally, a control corresponding to each member may include a deletion option. For example, a control corresponding to the user E includes a deletion option 5113. The user A may tap the deletion option 5113 to delete a member.

In a possible implementation, a member in the group or a member in the subcategory may have a permission of modifying the group label, for example, have permissions of adding a member, deleting a member, modifying the label name, and/or modifying/deleting/adding the rule content.

In another possible implementation, a member in the group has only a permission of viewing the group-label information, but does not have a permission of modifying the group-label information. To be specific, the user may tap the group label to view the information shown in (2) in FIG. 5. However, the displayed interface does not include some options for modifying the label information, for example, does not include the member addition option 5111.

S304a: The server sends group-label ownership indication information to the user A.

S304b: The server sends the group-label ownership indication information to the user B.

For example, the server may send the group-label ownership indication information to the matched member (for example, including the user A, the user B, and the user E, where the user A and the user B are used as an example for description in this example) of the subgroup, to indicate that the user receiving the indication information is a member of the subgroup, which may be understood as an owner of the group label.

For example, the user A is used as an example. The server sends the group-label ownership indication information to the user A, to indicate that the user A is a member of the subgroup corresponding to the group label "Suzhou". The user A may record the user A as a member of the subgroup whose group-label name is "Suzhou". In this embodiment of this application, the user A may store a group-label ownership record table, and the record table may include a group to which the user A belongs and a subgroup to which the user A belongs in the group. In this application, only a form of the record table is used as an example for description. In another embodiment, another record form may be used. This is not limited in this application. Table 2 is an example of content of a record table.

**Table 2**

| Group name | Group label |
|---|---|
| Project team A | Suzhou |
| | Project manager |
| | Expert |
| Project team B | Expert |

As shown in Table 2, the subgroup to which the user A belongs in the project team A (namely, the group) and that is recorded in the record table of the user A includes the subgroup whose group-label name is "Suzhou", a subgroup whose group-label name is "Project manager", and a subgroup whose group-label name is "Expert". In addition, the record table further records that a subgroup to which the user A belongs in the project team B (another group) includes a subgroup whose group-label name is "Expert".

It may be understood that, when a message sent by a member in the project team A includes a message that the subgroups "Suzhou", "Project manager", and/or "Expert" are reminded to concern, reminder text is displayed in the chat application of the user A. A specific embodiment is described in detail in the following embodiments.

In a possible implementation, the server may send the group-label information and the group-label ownership indication information in a same message. For example, after the server determines that the user A and the user B are members of the subgroup whose label name is "Suzhou", the server sends a group-label creation indication message to all members (using the user A, the user B, and the user C as an example) in the group. For example, the group-label creation indication message sent by the server to the user A and the user B, namely, the members belonging to the subgroup whose label name is "Suzhou", includes but is not limited to: the group-label information and the group-label ownership indication information. The group-label information includes but is not limited to: the group name (for example, the project team A), the label name (for example, "Suzhou"), the description information of a label (for example, "All members in Suzhou"), the rule content (for example, "A work location is equal to Suzhou"), and the member information (for example, including identification information of the user A, the user B, and the user E). The group-label ownership indication information indicates that a user belongs to the subgroup corresponding to the group label. For example, the group-label creation indication message sent by the server to the user C, namely, a member that does not belong to the subgroup whose label name is "Suzhou", includes but is not limited to: the group-label information. In other words, for a member belonging to the subgroup corresponding to the group label, the indication message sent by the server to the member includes the group-label ownership indication information. For a member that does not belong to the subgroup corresponding to the group label, the indication message sent by the server to the member does not include the group-label ownership indication information. It may be understood that, in this embodiment of this application, the group-label ownership indication information and the group-label information may be carried in a same message for sending, to reduce data exchange between devices.

In another possible implementation, as described above, the group-label information sent by the server to the user may include the member information, where the member information may indicate a member included in the subgroup corresponding to the group label. For example, the member information may be identification information of the member in the subgroup. Correspondingly, after receiving the group-label information, each user in the group may match identification information of the user with the identification information in the member information. A user whose identification information is successfully matched is a member in the subgroup corresponding to the group label. On the contrary, a user whose identification information fails to be matched is not a member in the subgroup corresponding to the group label. In this example, because the owner of the group label, namely, a member of the subgroup corresponding to the group label, may determine, based on identification information of the owner, whether the owner is a member of the subgroup, the server does not need to feed back the group-label ownership indication information, that is, does not need to perform S304, thereby reducing the data exchange between the devices and saving a radio resource.

It is to be noted that the exchange between the devices may include a plurality of times. For example, after receiving a message sent by the server, the user A may feed back an acknowledgment message to the server, to indicate that the message sent by the server is successfully received. For a specific exchange procedure, refer to embodiments of the conventional technology. Details are not described in this application.

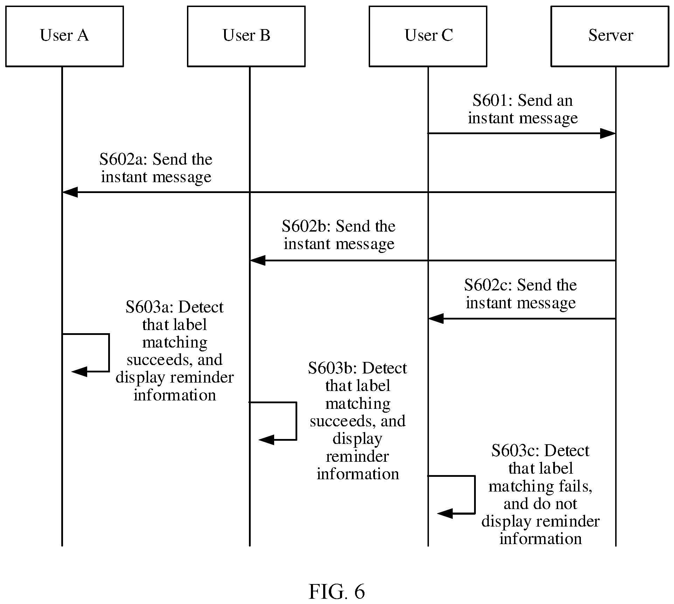

FIG. 6 is a schematic flowchart of an example of communication. Refer to FIG. 6. The flowchart is mainly for describing a procedure of message exchange in a group, and steps include but are not limited to the following steps.

S601: A user C sends an instant message to a server.

For example, this example is described by using an example in which the user C sends the message. In another embodiment, any member in the group may perform a same step as that of the user C. Examples are not described one by one in this application.

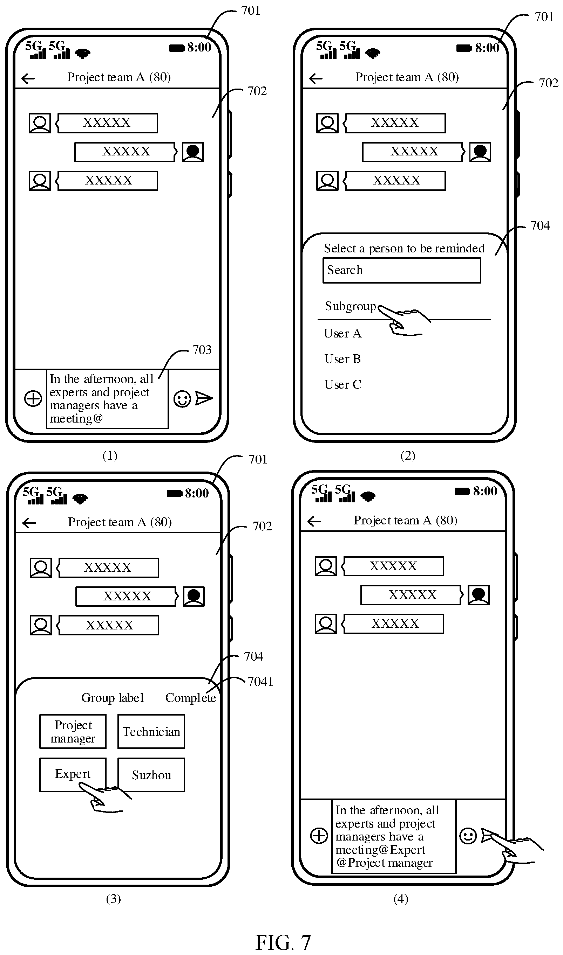

FIG. 7 is a diagram of an example of user interfaces. Refer to (1) in FIG. 7. A display interface 701 includes a chat interface 702 of a project team A. The chat interface 702 includes but is not limited to a name of the project team A, a received message, an enter box 703, and the like. The user C may enter information in the enter box, for example, "In the afternoon, all experts and project managers have a meeting@". For example, a chat application detects that the user enters a reminder character (namely, a character "@") in the enter box. As shown in (2) in FIG. 7, the chat application displays an option box 704 of "Select a person to be reminded". The option box 704 of "Select a person to be reminded" includes but is not limited to a search box and a reminded object.

For example, the reminded object includes but is not limited to a subgroup and each user in the group. The subgroup is one or more subgroups that have been created in the group.

Optionally, if the current user is a group owner of the project team A, the reminded object in the option box 704 includes but is not limited to an option "all", a group option, and an option corresponding to each user (for example, a user A, a user B, and the user C) of the project team A. Optionally, the option "all" is for reminding all users (or may be referred to as members, to be specific, all members including the group owner) in the group to concern the message. The option corresponding to each user is for reminding a specified user in the group to concern the message.

In this example, the user C is not the group owner, and the option box 704 of the user C does not include the option "all". Certainly, in another embodiment, the option box 704 of the non-group owner may alternatively include the option "all". This is not limited in this application.

For example, still refer to (2) in FIG. 7. For example, the user C taps a subgroup option, to remind members of one or more subgroups to concern. As shown in (3) of FIG. 7, the chat application displays a group-label option box 704 in response to a received user operation. The group-label option box 704 includes but is not limited to controls corresponding to group-label names corresponding to a plurality of created subcategories and a completion control 7041, for example, including but not limited to a control "Project manager", a control "Technician", a control "Expert", and a control "Suzhou". The user C may select one or more subgroups by tapping the control. This embodiment is described by using an example in which the user C taps the control "Project manager" and the control "Expert". In other words, the user C selects to remind members in two subgroups whose label names are "Project manager" and "Expert" to concern the message sent by the user C. Refer to (4) in FIG. 7. For example, after editing the information, the user C taps a send option to send the instant message. Optionally, the user C may view information such as a label name, description information, rule content, and/or member information in the subgroup "Expert" by long pressing (or performing another operation on) the control "Expert". It may be understood that, because the subgroup may be created by the group owner, when a group member needs to select a subgroup, the group member may view related information of the subgroup in advance to determine whether the selected subgroup is an object that the group member needs to remind.

For example, a chat application of the user C sends the instant message to the server. The instant message includes but is not limited to: identification information of the user C, identification information of the group, and text content. For example, the text content includes text information (In the afternoon, all experts and project managers have a meeting), a reminder symbol (namely, the character "@"), and the reminded object (namely, the subgroups corresponding to "Expert" and "Project manager"). Optionally, the identification information of the user C may be an ID number of the user C in the chat application. The identification information of the group is "Project team A".

Correspondingly, the instant message indicates the user C to send the text content to all users in the group (namely, the project team A), and remind members in the subgroup whose label name is "Expert" and the subgroup whose label name is "Project manager" to concern the message.

S602a: The server sends the instant message to the user A.

S602b: The server sends the instant message to the user B.

S602c: The server sends the instant message to the user C.

For example, the server receives the instant message sent by the user C. Information carried in the obtained instant message includes but is not limited to: the identification information of the user C, the identification information of the group, and the text content. The text content includes the reminder symbol and the reminded object. The reminded object is the identification information (namely, the label name) of the subgroup (for example, the subgroup "Expert").

For example, the server determines, based on the identification information of the group, that the message is sent to a specified group, for example, the group "Project team A".

The server forwards the instant message to all members in the group (for example, "Project team A"), including the user A to a user E. The instant message forwarded by the server includes but is not limited to: the identification information of the user C, the identification information of the group, and the text content.

It is to be noted that S602a to S602c may be performed simultaneously, or may be performed sequentially. A message sending sequence is not limited in this application.

S603a: The user A detects that label matching succeeds, and displays reminder information.

For example, the user A receives the instant message sent by the server, and obtains information such as the identification information of the user C, the identification information of the group, and the text content included in the instant message.

A chat application of the user A determines, based on the identification information of the group and the identification information of the user C, that the instant message is sent by the user C in the project team A. In addition, the chat application of the user A further recognizes the text content, and detects that the text content includes at least one reminder character, namely, the character "@". The chat application of the user A obtains a reminded object corresponding to each reminder character. For example, the reminded object is "Expert" and "Project manager".

The chat application of the user A matches the obtained reminded object with the locally stored group-label ownership record table. Optionally, the chat application of the user A may first detect whether the reminded object is "all" or "User A". If the reminded object is "all" or "User A", processing may be performed based on related content in FIG. 2, and details are not described herein again.

For example, content recorded in Table 2 is still used as an example. The chat application of the user A matches the reminded object "Expert" (where the object is a label name, and details are not described below again) with the group label corresponding to the project team A in Table 2, and determines that the matching succeeds. The chat application of the user A may determine that the user A belongs to the reminded object, to be specific, a member in the subgroup "Expert". For example, the chat application of the user A matches "Project manager" with the group label corresponding to the project team A in Table 2, and determines that the matching succeeds. The chat application of the user A may determine that the user A belongs to the reminded object, to be specific, a member in the subgroup "Project manager".

It is to be noted that the chat application may simultaneously perform a matching operation on a plurality of reminded objects, or may perform a matching operation in sequence. This is not limited in this application.

For example, after determining that the user A is the reminded object of the received message, the chat application of the user A displays the reminder information.

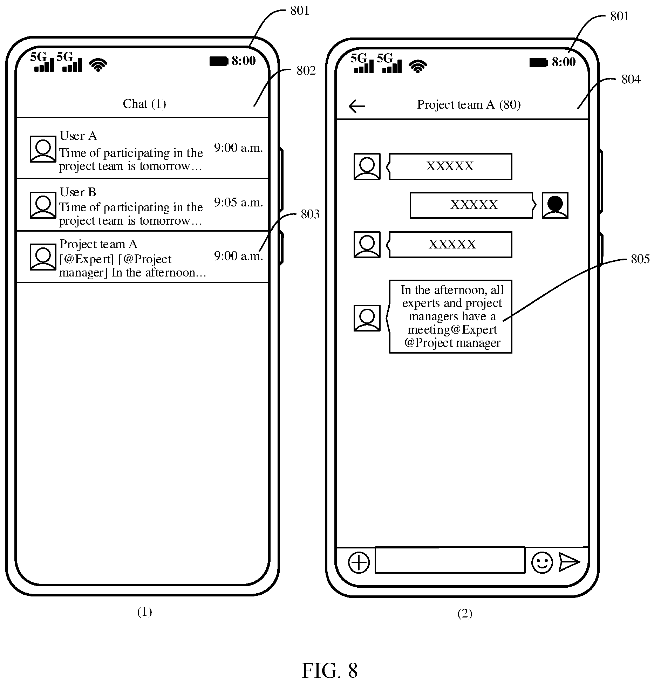

In an example, a display manner of the reminder information may be displaying the reminder text in a chat list. For example, FIG. 8 is a diagram of an example of user interfaces. Refer to (1) in FIG. 8. A chat interface 802 of the user A on a display interface 801 includes but is not limited to chat option boxes of a plurality of chat objects. For example, the chat option box 803 of the project team A includes but is not limited to identification information (including a name and an icon), reminder text, and a latest message (which may be all information or partial information in the latest message) of the project team A. For example, as described above, the chat application of the user A detects that the reminded object corresponding to the user includes the subgroup "Expert" and the subgroup "Project manager". Correspondingly, the reminder text may include but is not limited to "[@Expert]" and "[@Project manager]", to indicate that a chat group of the project team A includes a message that the subgroups to which the user A belongs (namely, the subgroup "Expert" and the subgroup "Project manager") are reminded to concern. For example, the user may tap a chat option box 803 of the project team A to view a chat message in the project team A. Refer to (2) in FIG. 8. The chat application displays a chat interface 804 of the project team A in response to the received user operation. The chat interface 804 includes but is not limited to a plurality of instant messages, including an instant message 805 sent by the user C. The instant message displays the text content, to be specific, "In the afternoon, all experts and project managers have a meeting @Expert@Project manager".

In another example, a display manner of the reminder information may be displaying the reminder text in prompt information. For example, the prompt information indicates that the chat application includes a new unread message. Optionally, the prompt information may be displayed on an interface such as a lock screen, a notification bar, or a leftmost screen. For example, the mobile phone is on the lock screen, and the chat application may display the prompt information on the lock screen, to indicate that a new message exists in the group of the project team A. The prompt information may include the reminder text (for content of the text, refer to the foregoing descriptions), to indicate that an unread message that needs to be concerned by the user A exists in the project team A.

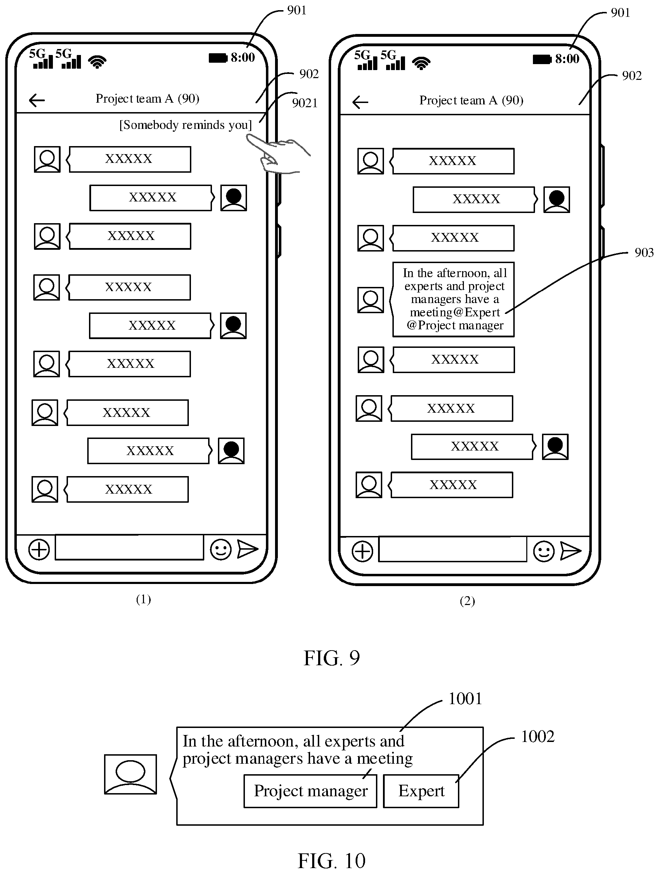

In another example, a display manner of the reminder information may be alternatively displaying the reminder text in a chat interface. For example, FIG. 9 is a diagram of an example of user interfaces. Refer to (1) in FIG. 9. A chat interface 902 of the project team A displayed on a display interface 901 of the user A includes a plurality of instant messages. Because the user A may not view, in a timely manner, a message that reminds the user A, an instant message that reminds the user A to concern is moved upward. Optionally, the chat interface of the project team A may include reminder text 9021, for example, "[Somebody reminds you]". Certainly, in another embodiment, there may be other reminder text, for example, may be "Someone@Expert@Project manager", or may be "[Someone@you]". The reminder text may be set based on an actual requirement. This is not limited in this application. The user A may tap the reminder text. As shown in (2) in FIG. 9, the chat application receives a user operation, and jumps to a latest instant message that includes the reminder character and whose reminded object includes the user A, for example, jumps to an instant message 903.

In still another example, the chat application may further indicate, in a manner of vibration, ringing, and displaying a quantity of messages on an icon or blinking an icon, that an instant message that needs to be concerned by the user currently exists. For example, if the user A sets the project team A to a no-message-disturbing mode, when detecting that the project team A includes an instant message that reminds the user A to concern, the chat application may prompt, in a manner such as vibration, ringing, blinking an icon of the chat application, or displaying a quantity of unread messages (or unread messages that the user A need to concern) on the icon of the chat application, the user A to concern the instant message in the project team A.

In still another example, FIG. 10 is a diagram of an example of reminder information. Refer to FIG. 10. For example, the reminded object may alternatively be displayed in a manner of an icon. For example, "@Expert" and "@Project manager" in original text are respectively converted into corresponding icons, that is, an icon 1001 corresponding to "@Expert" and an icon 1002 corresponding to "@Project manager". Certainly, the display manner may be alternatively applied to a chat list. This is not limited in this application.

It is to be noted that the reminding manner described in this embodiment of this application is merely an example. The display manner of the reminder information may be set in any manner based on an actual requirement. This is not limited in this application.

S603b: The user B detects that label matching succeeds, and displays reminder information.

For example, the user B may also pre-store a group-label ownership record table, and the record table may include a group to which the user B belongs and a subgroup to which the user B belongs in the group. For example, as shown in Table 3:

**Table 3**

| Group name | Group label |
|---|---|
| Project team A | Suzhou |
| | Expert |

As shown in Table 3, the user B belongs to the subgroup "Suzhou" and the subgroup "Expert" in the project team A. A specific setting and a storage mode are similar to those of the user A, and are not described herein again.

A chat application of the user B matches the reminded object "Expert" with the group label corresponding to the project team A in Table 3, and determines that the matching succeeds. The chat application of the user B may determine that the user B belongs to the reminded object, to be specific, a member in the subgroup "Expert". For example, the chat application of the user B matches "Project manager" with the group label corresponding to the project team A in Table 3, and determines that the matching fails. The chat application of the user B may determine that the user B does not belong to the reminded object, to be specific, a member in the subgroup "Project manager".

It is to be noted that, using the user A as an example, the user A corresponds to two reminded objects (namely, members in the subgroup "Expert" and the subgroup "Project manager"), and the user A is an object reminded by the instant message to concern. In this embodiment of this application, if the user B corresponds to at least one of a plurality of reminded objects, for example, the user B corresponds to one of two objects reminded by the instant message, the user B is also the reminded object of the instant message.

After determining that the user B is a member of the reminded object, namely, the subgroup "Expert", the chat application of the user B may display the reminder information. For example, the chat application of the user B may display, in a chat list, reminder text in a chat option box of the project team A, and the reminder text may be "[@Expert]". In other words, the reminder text of the user B displays only text corresponding to the reminded object to which the user B belongs. For a specific display manner of the reminder information, refer to the display manner of the user A. Details are not described herein again.

S603c: The user C detects that label matching fails, and does not display reminder information.

For example, the user C may also pre-store a group-label ownership record table, and the record table may include a group to which the user C belongs and a subgroup to which the user C belongs in the group. For example, as shown in Table 4:

**Table 4**

| Group name | Group label |
|---|---|
| Project team A | Technician |
| Project team B | Nanjing |

As shown in Table 4, the user C belongs to the subgroup "Technician" in the project team A and the subgroup "Nanjing" in the project team B. A specific setting and a storage mode are similar to those of the user A, and are not described herein again.

A chat application of the user C matches the reminded object "Expert" with the group label corresponding to the project team A in Table 4, and determines that the matching fails. The chat application of the user C may determine that the user C does not belong to the reminded object, to be specific, a member in the subgroup "Expert". For example, the chat application of the user C matches "Project manager" with the group label corresponding to the project team A in Table 4, and determines that the matching fails. The chat application of the user C may determine that the user C does not belong to the reminded object, to be specific, a member in the subgroup "Project manager".

The chat application of the user C determines that the user C is not the reminded object of the instant message, and does not display the reminder information. In other words, although the user C can receive the instant message, the user C does not display the reminder information to remind the user to concern the message. The user C can view the instant message after opening a group chat interface. Certainly, in some embodiments, the user C enables an instant-message notification function of the project team A. To be specific, the user C displays prompt information (where the prompt information is different from the reminder information, and for concepts, refer to the foregoing descriptions) as long as the user C receives a message of the project team A.

In a possible implementation, steps performed by the client (namely, the chat application) may also be performed by the server. For example, as described above, the server records member information included in each subgroup in each group. Correspondingly, when the server receives a message that includes the reminder character and the reminded object and that is sent by the user C, the server may identify the message, to determine that the message includes the reminder character and the reminded object. Further, the server may determine, based on recorded members of the subgroup, that the reminded object includes the user A and the user B. The server sends the message of the user C to all members in the group. The message sent by the server to the user A and the user B (namely, the reminded objects) includes reminder indication information, to remind the user A and the user B to concern the message. Optionally, if the reminded object includes "Suzhou" and "Project manager", that is, the server detects that the user A is in two subgroups, the reminder indication information sent by the server to the user A may include label names of "Suzhou" and "Project manager", to indicate that members in the two subgroups are reminded to concern the message, and the user A belongs to the two subgroups. In this example, the client and the server may not perform the step in S304. In other words, the client does not need to store information about a subgroup to which the client belongs, but the server stores the information. In addition, in a message interaction process, the server identifies a user included in the subgroup corresponding to the reminded object.

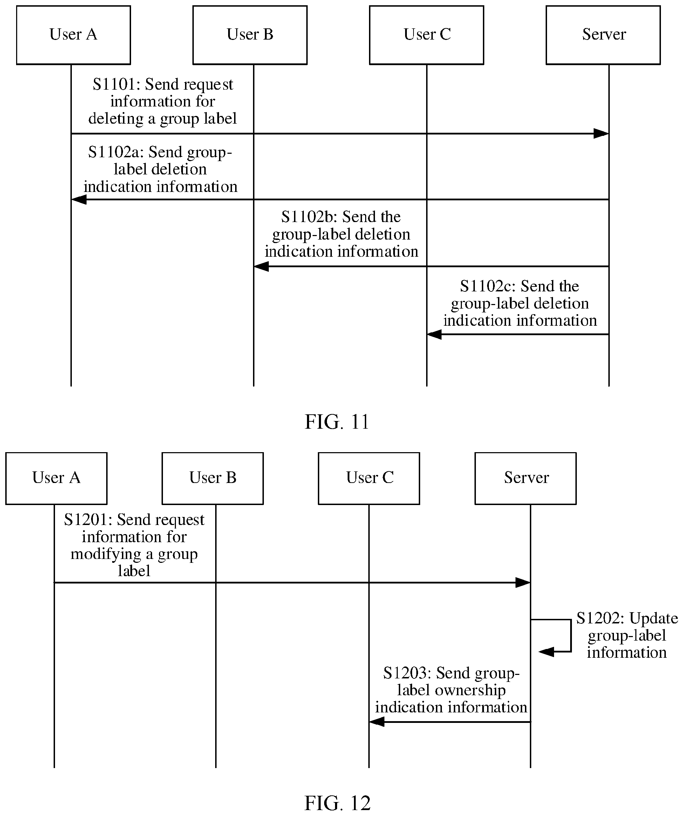

FIG. 11 is a schematic flowchart of an example of deleting a group label. Refer to FIG. 11. In this example, deleting a group label is used as an example for description. Steps include but are not limited to the following steps.

S1101: A user A sends, to a server, request information for deleting a group label.

For example, in this embodiment of this application, as described above, the user A is a group owner, and has permissions of adding, deleting, and modifying a group label. Certainly, in another embodiment, another member or some members in the group may also have permissions of addition, deletion, and/or modification. This is not limited in this application.

For example, FIG. 5 is used as an example for description. Refer to (2) in FIG. 5. The user may tap the deletion option 513 to delete the subgroup "Suzhou". In response to a received user operation, the chat application sends, to the server, the request information for deleting a group label. The information includes but is not limited to: the identification information of the group (for example, the identification information of the project team A), the group-label name (namely, "Suzhou"), and deletion indication information. The request information indicates to delete the subgroup "Suzhou" in the project team A.

S1102a: The server sends group-label deletion indication information to the user A.

S1102b: The server sends the group-label deletion indication information to a user B.

S1102c: The server sends the group-label deletion indication information to a user C.

For example, the server sends group-label deletion indication information to the user A. The group-label deletion indication information includes but is not limited to the identification information (namely, "Proj ect team A") of the group and the group-label name (namely, "Suzhou"), to indicate the user A to delete information related to the subgroup "Suzhou".

For example, the user A deletes the locally stored information such as the label name, the description information of a label, and the member information corresponding to the subgroup. "Suzhou" In addition, the user A deletes information about the owner of the subgroup "Suzhou" recorded in Table 1.

Processing of the user B is the same as that of the user A. Details are not described herein again. The user C also deletes the locally stored information such as the label name, the description information of a label, and the member information corresponding to the subgroup. "Suzhou"

For example, after each user deletes the subgroup "Suzhou", after any user in the group enters the reminder character (for example, the character "@"), a group label of a user that is selected for reminding and that is displayed by the chat application does not include the group label "Suzhou".

FIG. 12 is a schematic flowchart of an example of modifying a group label. Refer to FIG. 12. In this example, modifying a group label is used as an example for description. Steps include but are not limited to the following steps.

S1201: A user A sends, to a server, request information for modifying a group label.

For example, as described above, the user A may modify the group label. The modification includes but is not limited to: adding a member, deleting a member, modifying a label name, and/or modifying/deleting/adding permission of rule content.

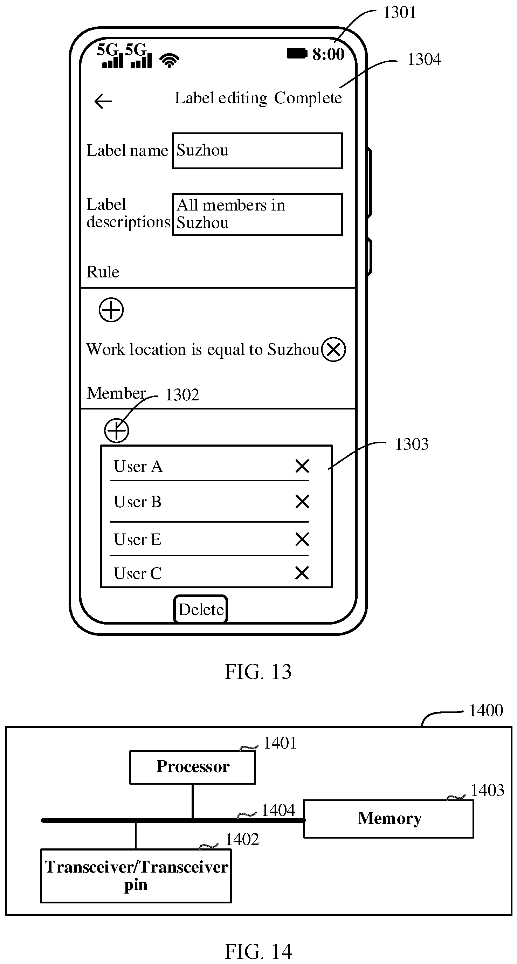

In this example, an example in which the user A adds a member is used for description. FIG. 13 is a diagram of an example of user interfaces. Refer to FIG. 13. A user may tap a member addition option 1302 in a display interface 1301, to add a member to a subgroup "Suzhou". For example, in this example, the user A adds a user C to the subgroup "Suzhou". Correspondingly, a member list box 1303 displays identification information of the user C, to indicate to add the user C to the subgroup "Suzhou". The user may tap a complete option 1304. Correspondingly, in response to a received user operation, the chat application sends, to the server, the request information for modifying a group label. The request information for modifying a group label includes but is not limited to: the identification information (namely, "Project team A") of the group, the group label (namely, "Suzhou"), and modification content. The modification content includes but is not limited to: member adding indication information and the identification information of the user C, to indicate to add the user C as a member in the subgroup "Suzhou".

S1202: The server updates group-label information.

For example, the server receives the request information for modifying a group label, and obtains the identification information (namely, "Project team A") of the group, the group label (namely, "Suzhou"), and the modification content that are carried. The server may determine, based on the request information for modifying a group label, to add the user C to the subgroup "Suzhou". The server may update the stored correspondence table (for example, Table 1), to add the user C to the subgroup "Suzhou".

S1203: The server sends group-label ownership indication information to the user C.

For example, the server sends the group-label ownership indication information to the user C, to indicate that the user C is a member of the subgroup "Suzhou". Correspondingly, the user C may update the locally stored group label ownership record table, to record that the user C is a member of the subgroup "Suzhou".

In a possible implementation, the server may send a group-label modification message to the group owner (namely, the user A) in the group or all users in the group. The message includes the modification content, and the message indicates that the user C is added to the subgroup "Suzhou".

In a possible implementation, the user A may modify the rule content. After the user A modifies the rule content, in response to a received user operation, the chat application sends a rule-content modification request message to the server. The message may include but is not limited to: the identification information of the group, the group label, and modification content. The server may re-match the members in the subgroup based on modified rule content. For a matching manner, refer to the foregoing related content. Details are not described herein again. For example, after matching a new member, the server may send group-label ownership indication information to the newly added member (for related descriptions, refer to the foregoing descriptions, and details are not described herein again), to indicate that the user is added to the subgroup. For example, if a user is deleted from the subgroup, the server sends group-label owner deletion indication information to the user. The group-label owner deletion indication information may include but is not limited to: the identification information of the group, the group label, and the like, to indicate that the user is no longer a member of the subgroup. Optionally, the server may alternatively send group-label update indication information to all the members in the group. The group-label update indication information includes the identification information of the group, the label name, the member information, the rule content, and the like, that is, the server sends all content of the group label to the members in the group again. In response to the received information, each user may update the stored information corresponding to the group label.

In a possible implementation, the user A may alternatively modify information such as the label name and/or label description content. The chat application may send, to the server, request information for modifying a group label. The request information includes but is not limited to: the identification information of the group, the group label, and modification content. The server may send group-label modification indication information to all the members in the group. The indication information includes but is not limited to: the identification information of the group, the group label, and the modification content. In response to the received indication information, the user modifies the locally stored information corresponding to the group label, for example, modifies the label name "Suzhou" to "Suzhou, Nanjing".

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is implemented by hardware or computer software driving hardware depends upon a particular application and design constraint of the technical solution. A person skilled in the art may use different methods to implement the described functions for each particular application with reference to embodiments, but it should not be considered that the implementation goes beyond the scope of this application.

In an example, FIG. 14 is a schematic block diagram of an apparatus 1400 according to an embodiment of this application. The apparatus 1400 may include a processor 1401 and a transceiver/transceiver pin 1402, and optionally, further include a memory 1403.

Components of the apparatus 1400 are coupled together through a bus 1404. In addition to a data bus, the bus 1404 further includes a power bus, a control bus, and a status signal bus. However, for clear description, various types of buses in the figure are referred to as the bus 1404.

Optionally, the memory 1403 may be configured to store instructions in the foregoing method embodiments. The processor 1401 may be configured to execute the instructions in the memory 1403, control a receive pin to receive a signal, and control a transmit pin to send a signal.

The apparatus 1400 may be the electronic device or a chip of the electronic device in the foregoing method embodiments.

All related content of the steps in the foregoing method embodiments may be cited in function descriptions of the corresponding functional modules. Details are not described herein again.

An embodiment further provides a computer storage medium. The computer storage medium stores computer instructions, and when the computer instructions are run on an electronic device, the electronic device is enabled to perform the foregoing related method steps to implement the communication method in the foregoing embodiments.

An embodiment further provides a computer program product. When the computer program product runs on a computer, the computer is enabled to perform the foregoing related steps, to implement the communication method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the communication method in the foregoing method embodiments.

The electronic device, the computer storage medium, the computer program product, or the chip provided in this embodiment is configured to perform the corresponding method provided above. Therefore, for beneficial effect that can be achieved, refer to the beneficial effect of the corresponding method provided above. Details are not described herein again.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A communication method, comprising:
receiving, by a first client, a first message sent by a second client in a group, wherein the first message comprises a reminder symbol and a first reminded object, the reminder symbol indicates the first reminded object to concern the first message, the first reminded object comprises identification information of a first subgroup, the first subgroup comprises a plurality of members, the plurality of members belong to the group, and a quantity of the plurality of members is less than a quantity of members comprised in the group;
determining, by the first client based on the first message and pre-stored role information, that a first user of the first client belongs to the first reminded object, wherein the role information indicates that the first user is a member of the first subgroup; and
displaying, by the first client, reminder information, wherein the reminder information indicates that the group comprises a message that needs to be concerned by the first user.

2. The method according to claim 1, wherein the plurality of members have a same target attribute.

3. The method according to claim 1 or 2, wherein before the receiving, by a first client, a first message sent by a second client in a group, the method further comprises:
sending, by the first client to a server in response to a received first operation, subgroup addition request information, wherein the subgroup addition request information comprises identification information of the group, the identification information of the first subgroup, and the target attribute, and the subgroup addition request information indicates the server to create the first subgroup in the group and match the plurality of members based on the target attribute.

4. The method according to claim 3, wherein after the sending, by the first client to a server in response to a received first operation, subgroup addition request information, the method further comprises:
obtaining, by the first client, first role information sent by the server, wherein the first role information indicates that the first user belongs to the first subgroup.

5. The method according to claim 4, wherein after the sending, by the first client to a server in response to a received first operation, subgroup addition request information, the method further comprises:
receiving, by the first client, subgroup addition indication information sent by the server, wherein the subgroup addition indication information comprises the identification information of the group and the identification information of the first subgroup, and the subgroup addition indication information indicates that the server has created the first subgroup in the group; and
storing, by the first client in response to the subgroup addition indication information, group information of the first subgroup, wherein the group information of the first subgroup comprises the identification information of the group and the identification information of the first subgroup, and the group information indicates that the group comprises the first subgroup.

6. The method according to claim 4, wherein the first role information comprises the identification information of the first subgroup.

7. The method according to claim 4, wherein the role information stored in the first client further comprises second role information, the second role information comprises identification information of a second subgroup, the second role information indicates that the first user belongs to the second subgroup, and all or a part of the members in the first subgroup are different from members in the second subgroup.

8. The method according to claim 7, wherein the determining, by the first client based on the first message and pre-stored role information, that a first user of the first client belongs to the first reminded object comprises:
matching, by the first client, the identification information of the first subgroup with identification information comprised in the role information; and
determining, by the first client, that the identification information of the first subgroup is successfully matched, and determining that the first user belongs to the first subgroup.

9. The method according to any one of claims 4 to 8, wherein the method further comprises:
sending, by the first client to the server in response to a received second operation, subgroup update request information, wherein the subgroup update request information comprises the identification information of the group, the identification information of the first subgroup, and a new target attribute, and the subgroup update request information indicates the server to match a member for the first subgroup based on the new target attribute.

10. The method according to any one of claims 4 to 9, wherein the method further comprises:
sending, by the first client to the server in response to a received third operation, subgroup deletion request information, wherein the subgroup deletion request information comprises the identification information of the group and the identification information of the first subgroup, and the subgroup deletion request information indicates the server to delete the first subgroup in the group;
receiving, by the first client, subgroup deletion response information sent by the server, wherein the subgroup deletion response information indicates that the server has deleted the first subgroup in the group; and
deleting, by the first client in response to the subgroup deletion response information, the first role information comprised in the role information.

11. The method according to any one of claims 2 to 10, wherein the target attribute comprises one or more of the following:
a work location, a gender, a job title, and an educational background.

12. The method according to any one of claims 1 to 11, wherein the displaying, by the first client, reminder information comprises:
displaying, by the first client, the reminder information in at least one of the following manners:
displaying the reminder information on a lock screen, a leftmost screen, and/or a notification bar;
displaying the reminder information in a message display interface of the group; or
displaying, on an application interface of the first client, the reminder information in a message box corresponding to the group.

13. The method according to any one of claims 1 to 12, wherein the reminder information comprises the identification information of the first subgroup.

14. The method according to any one of claims 1 to 13, wherein the determining, by the first client based on the first message and pre-stored role information, that a first user of the first client belongs to the first reminded object comprises:
detecting, by the first client, that the first message comprises the reminder symbol, and determining, based on the role information, that the first user belongs to the first reminded object.

15. A communication apparatus, comprising:
one or more processors;
a memory; and
one or more computer programs, wherein the one or more computer programs are stored in the memory, and when the computer programs are executed by the one or more processors, the communication apparatus is enabled to perform the following steps:
receiving a first message sent by a second client in a group, wherein the first message comprises a reminder symbol and a first reminded object, the reminder symbol indicates the first reminded object to concern the first message, the first reminded object comprises identification information of a first subgroup, the first subgroup comprises a plurality of members, the plurality of members belong to the group, and a quantity of the plurality of members is less than a quantity of members comprised in the group;
determining, based on the first message and pre-stored role information, that a first user of a first client belongs to the first reminded object, wherein the role information indicates that the first user is a member of the first subgroup; and
displaying reminder information, wherein the reminder information indicates that the group comprises a message that needs to be concerned by the first user.

16. The communication apparatus according to claim 15, wherein the plurality of members have a same target attribute.

17. The communication apparatus according to claim 15 or 16, wherein when the computer programs are executed by the one or more processors, the communication apparatus is enabled to perform the following step:
sending, to a server in response to a received first operation, subgroup addition request information, wherein the subgroup addition request information comprises identification information of the group, the identification information of the first subgroup, and the target attribute, and the subgroup addition request information indicates the server to create the first subgroup in the group and match the plurality of members based on the target attribute.

18. The communication apparatus according to claim 17, wherein when the computer programs are executed by the one or more processors, the communication apparatus is enabled to perform the following step:
obtaining first role information sent by the server, wherein the first role information indicates that the first user belongs to the first subgroup.

19. The communication apparatus according to claim 18, wherein when the computer programs are executed by the one or more processors, the communication apparatus is enabled to perform the following steps:
receiving subgroup addition indication information sent by the server, wherein the subgroup addition indication information comprises the identification information of the group and the identification information of the first subgroup, and the subgroup addition indication informationindicates that the server has created the first subgroup in the group; and
storing, in response to the subgroup addition indication information, group information of the first subgroup, wherein the group information of the first subgroup comprises the identification information of the group and the identification information of the first subgroup, and the group information indicates that the group comprises the first subgroup.

20. The communication apparatus according to claim 19, wherein the first role information comprises the identification information of the first subgroup.

21. The communication apparatus according to claim 20, wherein the role information further comprises second role information, the second role information comprises identification information of a second subgroup, the second role information indicates that the first user belongs to the second subgroup, and all or a part of the members in the first subgroup are different from members in the second subgroup.

22. The communication apparatus according to claim 21, wherein when the computer programs are executed by the one or more processors, the communication apparatus is enabled to perform the following steps:
matching the identification information of the first subgroup with identification information comprised in the role information; and
determining that the identification information of the first subgroup is successfully matched, and determining that the first user belongs to the first subgroup.

23. The communication apparatus according to any one of claims 18 to 22, wherein when the computer programs are executed by the one or more processors, the communication apparatus is enabled to perform the following step:
sending, to the server in response to a received second operation, subgroup update request information, wherein the subgroup update request information comprises the identification information of the group, the identification information of the first subgroup, and a new target attribute, and the subgroup update request message indicates the server to match a member for the first subgroup based on the new target attribute.

24. The communication apparatus according to any one of claims 18 to 23, wherein when the computer programs are executed by the one or more processors, the communication apparatus is enabled to perform the following steps:
sending, to the server in response to a received third operation, subgroup deletion request information, wherein the subgroup deletion request information comprises the identification information of the group and the identification information of the first subgroup, and the subgroup deletion request information indicates the server to delete the first subgroup in the group;
receiving subgroup deletion response information sent by the server, wherein the subgroup deletion response information indicates that the server has deleted the first subgroup in the group; and
deleting, in response to the subgroup deletion response information, the first role information comprised in the role information.

25. The communication apparatus according to any one of claims 16 to 24, wherein the target attribute comprises one or more of the following:
a work location, a gender, a job title, and an educational background.

26. The communication apparatus according to any one of claims 15 to 25, wherein when the computer programs are executed by the one or more processors, the communication apparatus is enabled to display the reminder information in at least one of the following manners:
displaying the reminder information on a lock screen, a leftmost screen, and/or a notification bar;
displaying the reminder information in a message display interface of the group; or
displaying, on an application interface of the first client, the reminder information in a message box corresponding to the group.

27. The communication apparatus according to any one of claims 15 to 26, wherein the reminder information comprises the identification information of the first subgroup.

28. The communication apparatus according to any one of claims 15 to 27, wherein when the computer programs are executed by the one or more processors, the communication apparatus is enabled to perform the following step:
detecting that the first message comprises the reminder symbol, and determining, based on the role information, that the first user belongs to the first reminded object.

29. A graphical user interface on a computer device, wherein the computer device comprises a display, a touch-sensitive surface, a memory, and one or more processors that execute one or more instructions stored in the memory, wherein when the one or more instructions are executed by the one or more processors, the computer device is enabled to perform the following steps:
receiving a first operation, wherein the first operation indicates to add a subgroup to a group;
displaying a subgroup setting interface based on the first operation;
receiving a second operation on the subgroup setting interface, wherein the second operation indicates to set identification information of a first subgroup and a target attribute of the first subgroup; and
receiving a third operation on the subgroup setting interface, and sending, to a server, subgroup addition request information, wherein the subgroup addition request information comprises identification information of the group, the identification information of the first subgroup, and the target attribute, and the subgroup addition request information indicates the server to create the first subgroup in the group and match a plurality of members based on the target attribute.

30. A computer storage medium, comprising computer instructions, wherein when the computer instructions are run on an electronic device, the electronic device is enabled to perform the method according to any one of claims 1 to 14.

31. A computer program product, wherein when the computer program product runs on a computer, the computer is enabled to perform the method according to any one of claims 1 to 14.
